(19) Europäisches Patentamt
European Patent Office
Office européen des brevets

(11) **EP 3 927 989 B1**

(12) **FASCICULE DE BREVET EUROPEEN**

(45) Date de publication et mention de la délivrance du brevet:
**27.03.2024 Bulletin 2024/13**

(21) Numéro de dépôt: **20710250.0**

(22) Date de dépôt: **19.02.2020**

(51) Classification Internationale des Brevets (IPC):
**F16D 9/08** *(2006.01)* **F16D 1/10** *(2006.01)*

(52) Classification Coopérative des Brevets (CPC):
**F01D 5/026; F01D 21/045; F02C 7/36; F16C 3/02; F16D 3/72; F16D 9/06;** F05D 2240/61; F05D 2240/62; F16C 3/023; F16C 2326/43; F16D 2001/103; Y02T 50/60

(86) Numéro de dépôt international:
**PCT/FR2020/050309**

(87) Numéro de publication internationale:
**WO 2020/169927 (27.08.2020 Gazette 2020/35)**

(54) **ARBRE DE TRANSMISSION COMPRENANT UNE SECTION FUSIBLE ET PROCÉDÉ DE PROTECTION CONTRE UN SUR-COUPLE D'UN TEL ARBRE DE TRANSMISSION**

ANTRIEBSWELLE MIT EINEM SCHMELZABSCHNITT UND VERFAHREN ZUM SCHUTZ EINER SOLCHEN ANTRIEBSWELLE GEGEN EIN ÜBERDREHMOMENT

DRIVE SHAFT COMPRISING A FUSIBLE SECTION AND METHOD FOR PROTECTING SUCH A DRIVE SHAFT AGAINST AN OVERTORQUE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.02.2019 FR 1901776**

(43) Date de publication de la demande:
**29.12.2021 Bulletin 2021/52**

(73) Titulaire: **SAFRAN AIRCRAFT ENGINES**
**75015 Paris (FR)**

(72) Inventeurs:
• **NEGRI, Arnaud, Nicolas**
**77550 MOISSY-CRAMAYEL (FR)**
• **BECOULET, Julien, Fabien, Patrick**
**77550 MOISSY-CRAMAYEL (FR)**
• **BRAULT, Michel, Gilbert, Roland**
**77550 MOISSY-CRAMAYEL (FR)**
• **CUVILLIER, Romain, Guillaume**
**77550 MOISSY-CRAMAYEL (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**EP-A1- 3 205 840** **EP-A2- 1 199 441**
**US-A1- 2010 111 691**

## Description

### Domaine technique de l'invention

La présente invention concerne un arbre de transmission d'une turbomachine, une turbomachine comportant un tel arbre de transmission, ainsi qu'un procédé de protection contre un sur-couple d'un tel arbre de transmission.

### Arrière plan technique

L'état de la technique comporte notamment les demandes de brevet US-A1-2010/111691, EP-A2-1 199 441 et EP-A1-3 205 840.

De manière classique, une turbomachine d'aéronef, par exemple un turboréacteur, comporte d'amont en aval dans le sens de l'écoulement des gaz, une soufflante, un ou plusieurs compresseurs disposés en série, par exemple un compresseur basse pression et un compresseur haute pression, une chambre de combustion, une ou plusieurs turbines, par exemple une turbine basse pression et une turbine haute pression, et une tuyère.

La soufflante génère un flux d'air dont une partie alimente les organes de la turbomachine précités et forme un flux primaire dans une veine primaire, et une autre partie s'écoule dans une veine secondaire qui s'étend autour de la veine primaire et forme un flux d'air secondaire, qui génère une majeure partie de la poussée de la turbomachine. Un compresseur est configuré pour accroître la pression de l'air, qui est ensuite fourni à la chambre de combustion. Dans la chambre de combustion, de l'air est mélangé à un carburant et brûlé. Les gaz de combustion traversent ensuite une turbine, qui assure l'entraînement en rotation d'un compresseur en prélevant une partie de l'énergie de pression des gaz sortant de la chambre de combustion et en la transformant en énergie mécanique. La tuyère permet d'éjecter des gaz d'échappement pour produire également une force de propulsion de la turbomachine.

Dans certaines architectures de turbomachine, un réducteur est intégré entre la turbine basse pression et la soufflante, pour permettre un fonctionnement de la turbine et de la soufflante à des régimes différents, la turbine ayant une vitesse de rotation supérieure à celle de la soufflante.

En particulier, le rotor de la turbine basse pression est accouplé à la soufflante par l'intermédiaire du réducteur, d'un arbre qui relie le rotor de la turbine basse pression au réducteur et d'un arbre qui relie le réducteur à la soufflante. La position axiale d'un arbre est notamment déterminée par un palier de butée assurant le maintien de l'arbre dans le sens axial et éviter tout déplacement le long de son axe, et par son accouplement au réducteur. De façon connue, un turboréacteur à réducteur nécessite des zones souples sur la ligne de transmission de l'arbre de la turbine basse pression au réducteur, afin d'isoler les phénomènes vibratoires des autres éléments du turboréacteur. Une zone souple est généralement réalisée sur l'arbre d'entrée du réducteur.

Afin de réaliser cette zone souple, il a été proposé d'intégré des soufflets sur l'arbre d'entrée du réducteur. Plus précisément, l'arbre d'entrée du réducteur est séparé en deux portions, qui sont reliées entre elles par des soufflets.

Il a également été proposé, dans la demande FR-A1-2 909 146, un dispositif de liaison de deux arbres rotatifs comprenant des cannelures rectilignes qui sont formées sur un des arbres rotatifs et qui sont engagées dans des cannelures rectilignes complémentaires formées sur l'autre des arbres rotatifs, et comprenant une partie cylindrique de plus grande souplesse sur l'autre des arbres rotatifs. La partie cylindrique présente des perçages, dont le nombre, la disposition et les dimensions sont déterminés de manière à calibrer la souplesse de la partie cylindrique.

Sur ces architectures de turbomachine, il est également nécessaire de protéger l'arbre de transmission d'un sur-couple dû à un grippage brutal dans le réducteur, et notamment en cas d'utilisation de paliers lisses pour les satellites du réducteur. En effet, en cas de grippage brutal d'un de ces paliers lisses, la turbine basse pression, de part son inertie et sa vitesse de rotation à l'instant précédant le grippage, génère un couple quasi-infini qui peut entraîner la rupture de la ligne de transmission entre la turbine basse pression et le réducteur.

Afin d'améliorer la sécurité au sein de la turbomachine, il est nécessaire de maîtriser cette zone de rupture, ainsi que le couple de rupture de la ligne de transmission.

Il a ainsi proposé, dans la demande US-A1-2017/0175753, l'intégration d'une section fusible en torsion dans la ligne de transmission à l'aval du réducteur. En particulier, cette demande concerne une turbomachine comportant un moyen de découplage interposé entre le réducteur et l'arbre de la turbine basse pression qui est apte à découpler le réducteur de l'arbre de la turbine basse pression en réponse au dépassement d'un couple résistant déterminé exercé par le réducteur sur l'arbre de la turbine basse pression.

Il a également été proposé, dans la demande FR-A-3 015 570, une turbomachine à ensemble d'hélices contrarotatives non carénées comprenant un carter interne solidaire en rotation d'un carter externe agencé autour dudit carter interne, et des moyens de support radiaux du carter externe par rapport au carter interne qui permettent de transmettre les efforts radiaux du carter interne au carter externe. Les moyens de support radiaux comportent un dispositif de découplage axial agencé entre les carters interne et externe, présentant des évidements et permettant de découpler, et donc d'amortir les déformations axiales transmises par les moyens de support radiaux du carter interne au carter externe.

Il est également possible d'intégrer une section fusible sur l'arbre d'entrée souple du réducteur. Toutefois, la longueur de l'arbre d'entrée du réducteur a un impact direct sur l'encombrement de la turbomachine, et de ce fait, cette solution technique augmente l'encombrement et la masse de la turbomachine.

L'invention a notamment pour but d'apporter une solution simple, économique et efficace à ces problèmes de l'art antérieur.

En particulier, l'invention permet de réaliser une fonction fusible sur l'arbre d'entrée souple du réducteur, sans augmenter l'encombrement, de la turbomachine.

**Résumé de l'invention**

A cet effet, l'invention concerne un arbre de transmission d'une turbomachine d'aéronef, comprenant :

- une première portion s'étendant longitudinalement selon un axe et ayant un premier diamètre,
- une deuxième portion s'étendant longitudinalement selon ledit axe et ayant un deuxième diamètre, et
- des moyens de liaison reliant lesdites première et deuxième portions et étant configurés pour transmettre un couple de ladite deuxième portion à ladite première portion, lesdits moyens de liaison comprennent au moins un soufflet comprenant :

  - une première section s'étendant longitudinalement selon ledit axe et ayant un diamètre supérieur auxdits premier et deuxième diamètres, et
  - des deuxièmes sections s'étendant radialement audit axe et encadrant ladite première section,

ledit arbre de transmission étant caractérisé en ce que ladite première section comporte au moins une section fusible comprenant au moins un orifice traversant et étant configurée pour se rompre lorsque la valeur d'un couple appliqué sur ladite première portion dépasse une valeur seuil prédéterminée.

Avantageusement, la section fusible est configurée pour être la seule à rompre les moyens de liaison afin de séparer la première portion de la deuxième portion de l'arbre de transmission lorsque la valeur d'un couple appliqué sur la première portion de l'arbre de transmission dépasse une valeur seuil prédéterminée.

En particulier, la section fusible est réalisée par l'orifice traversant dans la première section des moyens de liaison. En effet, la section fusible est configurée pour se rompre au niveau de l'orifice traversant en cas de sur-couple appliqué sur la première portion de l'arbre de transmission, de manière à protéger les autres éléments de la ligne de transmission.

En outre, ceci est particulièrement avantageux puisque de l'huile peut s'accumuler par centrifugation au niveau de la première section, et nécessite donc d'être évacuée pour ne pas générer de balourd d'huile ou de zone de rétention d'huile. L'orifice traversant a ainsi également le rôle d'un orifice de drainage de l'huile.

De ce fait, l'orifice traversant permet à la fois le drainage de l'huile qui peut s'accumuler au niveau de la première section et la fonction fusible nécessaire à la protection contre un sur-couple appliqué sur la première portion de l'arbre de transmission.

Comme la première section est soumise à une contrainte de torsion, le perçage de l'orifice traversant dans la première section implique un effet local de sur-contrainte, notamment au niveau de la périphérie de l'orifice traversant. Ce phénomène permet de réaliser la fonction fusible en cas de sur-couple appliqué sur la première portion de l'arbre de transmission.

De plus, cette solution technique permet de ne pas augmenter l'encombrement axial et radial de l'arbre de transmission, ni les coûts de fabrication de l'arbre de transmission.

Ainsi, le soufflet permet de répondre aux besoins de souplesse pour la dynamique d'ensemble et pour le désalignement.

Selon l'invention, un sur-couple est un couple appliqué sur la première portion dont la valeur dépasse une valeur seuil prédéterminée.

Les première et deuxième portions peuvent être de forme tubulaire. Le premier diamètre, c'est-à-dire le diamètre de la première portion, peut être sensiblement égal au deuxième diamètre, c'est-à-dire le diamètre de la deuxième portion. En variante, les premier et deuxième diamètres peuvent être différents l'un de l'autre.

L'épaisseur des première et deuxième portions peut être supérieure à l'épaisseur des deuxièmes sections. L'épaisseur des deuxièmes sections peut être supérieure à l'épaisseur de la première section.

La première section peut être de forme annulaire. Le diamètre de la première section peut être au moins 1,5 fois supérieur aux premier et deuxième diamètres.

La première section peut comporter une partie amincie dont l'épaisseur est inférieure à l'épaisseur de la première section. En particulier, la partie amincie peut comporter la section fusible.

La partie amincie peut s'étendre sur au plus 80 % de la longueur de la première section.

La section fusible peut être de forme annulaire. En variante, la section fusible peut s'étendre sur au moins un secteur angulaire de la première section.

La section fusible peut comprendre une pluralité d'orifices traversants. Les orifices traversants peuvent être régulièrement répartis sur la section fusible autour de l'axe.

Le ou chaque orifice traversant peut être de forme circulaire ou oblongue.

Le ou chaque orifice traversant peut être défini tel que :

[Math. 1]

$$\frac{(R_{OText}^2 - R_{OTint}^2)}{Kt} < (R_{PSext}^2 - R_{PSint}^2)$$

avec $R_{OText}$ la distance radialement externe entre ledit orifice traversant et ledit axe, $R_{OTint}$ la distance radialement interne entre ledit orifice traversant et ledit axe, $Kt$ un facteur de concentration de contrainte généré par ledit orifice traversant, $R_{PSext}$ le rayon externe entre ladite première section et ledit axe et $R_{PSint}$ le rayon interne entre ladite première section et ledit axe.

En particulier, un orifice traversant dont les dimensions respectent l'équation ci-dessus est un orifice apte à exercer une fonction fusible.

L'épaisseur de la première section, le nombre et les dimensions des orifices traversants peuvent être calibrés pour optimiser le drainage de l'huile de la première section et la fonction fusible.

Les moyens de liaison peuvent comprendre une pluralité de soufflets. Chaque soufflet peut comprendre :

- une première section s'étendant longitudinalement selon ledit axe et ayant un diamètre supérieur auxdits premier et deuxième diamètres, et
- des deuxièmes sections s'étendant radialement audit axe et encadrant ladite première section.

Pour au moins un des soufflets, dit premier soufflet, la première section dudit soufflet peut comporter au moins une section fusible comprenant au moins un orifice traversant et étant configurée pour se rompre lorsque la valeur d'un couple appliqué sur ladite première portion dépasse une valeur seuil prédéterminée. Un orifice traversant apte à exercer la fonction de fusible peut également avoir le rôle d'un orifice de drainage de l'huile.

Pour les autres soufflets, dits deuxièmes soufflets, la première section desdits soufflets peut comporter au moins un orifice de drainage de l'huile. Un orifice de drainage de l'huile n'est pas apte à exercer la fonction fusible des orifices traversants.

En particulier, la première section de chaque soufflet peut comporter au moins une section fusible comprenant au moins un orifice traversant et étant configurée pour se rompre lorsque la valeur d'un couple appliqué sur ladite première portion dépasse une valeur seuil prédéterminée.

La première portion peut comporter une première extrémité comprenant des dentures d'engrenage et étant apte à être reliée à un réducteur et une deuxième extrémité reliée auxdits moyens de liaison.

La deuxième portion peut comporter une première extrémité comprenant des cannelures et étant apte à être reliée à un deuxième arbre de transmission et une deuxième extrémité reliée auxdits moyens de liaison.

L'invention concerne également une turbomachine d'aéronef, comprenant :

- un arbre de transmission selon l'invention,
- un réducteur relié à ladite première portion, et
- un deuxième arbre de transmission relié à ladite deuxième portion.

Ainsi, cette solution technique permet d'assurer la fonction de découplage en sur-couple pour protéger la ligne de transmission en cas de grippage brutal dans un réducteur relié à l'arbre de transmission, tout en étant compatible avec une zone souple à l'entrée du réducteur, et en assurant le drainage de l'huile qui peut s'accumuler dans la zone souple.

L'invention concerne également un procédé de protection contre un sur-couple d'un arbre de transmission d'une turbomachine selon l'invention, comprenant une étape de rupture de la section fusible lorsque la valeur d'un couple appliqué sur la première portion dépasse une valeur seuil prédéterminée.

## Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :

[Fig. 1] la figure 1 est une vue schématique en coupe semi-axiale d'une turbomachine selon l'invention,
[Fig. 2] la figure 2 est une vue schématique en coupe axiale d'une partie d'une turbomachine selon l'invention,
[Fig. 3] la figure 3 est une vue schématique en coupe axiale d'un arbre de transmission selon l'invention,
[Fig. 4a-4d] les figures 4a, 4b, 4c et 4d sont des vues en perspective d'une partie d'un arbre de transmission selon des modes de réalisation de l'invention,
[Fig. 5a] la figure 5a représente schématiquement d'une partie d'un arbre de transmission selon la coupe A-A de la figure 4a, et
[Fig. 5b] la figure 5b représente schématiquement d'une partie d'un arbre de transmission selon la coupe B-B de la figure 4c.

## Description détaillée de l'invention

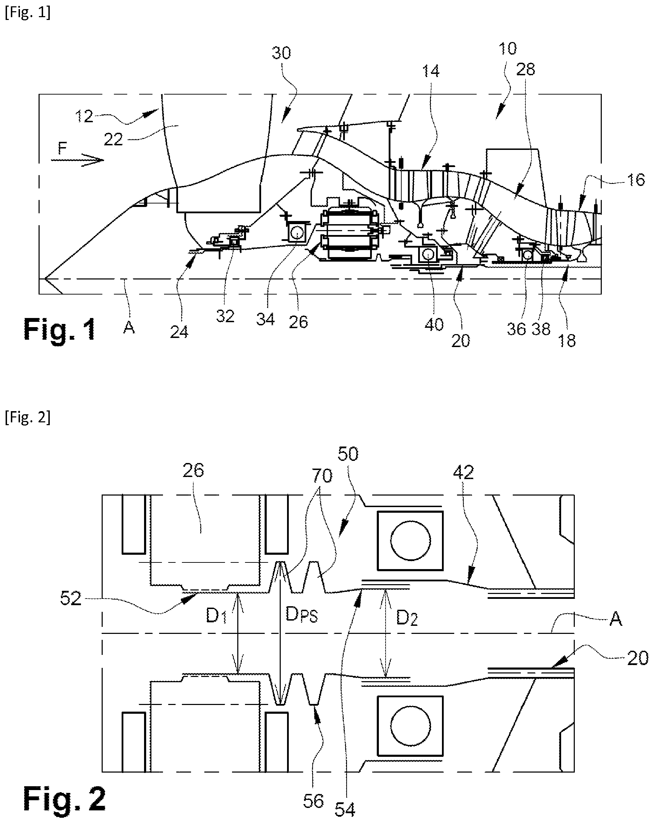

La figure 1 représente une turbomachine 10 d'aéronef, par exemple un turboréacteur à double flux et à double corps. La turbomachine 10 comporte, d'amont en aval selon le sens d'écoulement du flux des gaz dans la turbomachine représentés par la flèche F, une soufflante 12, un compresseur basse pression 14, un compresseur haute pression 16, une chambre annulaire de combustion (non représentée), une turbine haute pression (non représentée) et une turbine basse pression (non représentée).

Les rotors du compresseur haute pression 16 et de la turbine haute pression sont reliés par un arbre haute pression 18 et forment avec lui un corps haute pression. De même, les rotors du compresseur basse pression 14 et de la turbine basse pression sont reliés par un arbre basse pression 20 et forment avec lui un corps basse pression. Les arbres haute pression et basse pression 18, 20 s'étendent suivant un axe A longitudinal de la turbomachine 10.

La soufflante 12 comporte des pales 22 qui sont reliées à un arbre de soufflante 24. L'arbre de la soufflante 24 peut être lié en rotation à l'arbre basse pression 20 par l'intermédiaire d'un réducteur 26, par exemple du type à train épicycloïdal. Le réducteur 26 embraye d'une part sur l'arbre basse pression 20 par l'intermédiaire de cannelures qui entraînent un pignon d'engrenage planétaire, et d'autre part sur l'arbre de la soufflante 24 qui est attaché à un porte-satellites. Classiquement, le pignon planétaire, dont l'axe de rotation est confondu avec celui de la turbomachine, entraîne une série de pignons de satellites ou satellites, qui sont répartis régulièrement sur la circonférence du réducteur 26. Les satellites tournent aussi autour de l'axe de la turbomachine, en engrenant sur des dentures internes d'une couronne, qui est fixée à un stator de la turbomachine. Chacun des satellites tourne librement autour d'un axe de satellite relié au porte-satellite, à l'aide d'un palier qui peut être lisse ou à éléments roulants (roulements à billes ou à rouleaux). La rotation des satellites autour de leur axe de satellite, du fait de la coopération de leurs pignons avec les dentures de la couronne, entraîne la rotation du porte-satellites autour de l'axe de la turbomachine, et par conséquent celle de l'arbre de la soufflante 24 qui lui est lié, à une vitesse de rotation qui est inférieure à celle de l'arbre basse pression 20.

La turbomachine 10 peut également comprendre un carter de soufflante (non représenté) qui s'étend autour des pales 22 et qui définit une veine d'entrée d'air du flux des gaz F. Une partie de cet air pénètre dans une veine annulaire interne 28 d'écoulement d'un flux primaire, dite veine primaire, et l'autre partie alimente une veine annulaire externe 30 d'écoulement d'un flux secondaire, dite veine secondaire. La veine primaire 28 traverse les compresseurs basse pression 14 et haute pression 16, la chambre de combustion, et les turbines haute pression et basse pression. La veine secondaire 30 enveloppe des carters de compresseurs (non représentés) et des carters de turbines (non représentés) et rejoint la veine primaire 28 au niveau d'une tuyère (non représentée) de la turbomachine 10.

Les arbres haute pression 18, basse pression 20 et de la soufflante 24 sont centrés et guidés en rotation autour de l'axe A par des paliers, par exemple des paliers à roulement. Par exemple, l'arbre de la soufflante 24 est supporté par un palier amont 32, ici un palier à rouleaux, et par un palier aval 34, ici un palier à billes ; l'arbre haute pression 18 est supporté par un palier amont 36, ici un palier à billes, et par un palier aval 38, ici un palier à rouleaux ; et l'arbre basse pression 20 est supporté par un palier 40, ici un palier à billes.

La figure 2 représente plus précisément une partie de la turbomachine 10.

La turbomachine comporte un arbre de transmission 50 relié à une extrémité au réducteur 26 et à l'autre extrémité à un deuxième arbre de transmission 42. Le deuxième arbre de transmission 42 est relié à l'arbre basse pression 20.

L'arbre de transmission 50 s'étend longitudinalement selon l'axe A. L'arbre de transmission 50 comporte une première portion 52 de forme tubulaire s'étendant longitudinalement selon l'axe A et ayant un premier diamètre D1 et une deuxième portion 54 de forme tubulaire s'étendant longitudinalement selon l'axe A et ayant un deuxième diamètre D2. Ainsi, les première et deuxième portions 52, 54 sont coaxiales. Le premier diamètre D1 peut être compris entre 70 mm et 250 mm, par exemple entre 90 mm et 120 mm. Le deuxième diamètre D2 peut être compris entre 70 mm et 200 mm, par exemple entre 90 mm et 120 mm. En particulier, le premier diamètre D1 peut être sensiblement égal au deuxième diamètre D2.

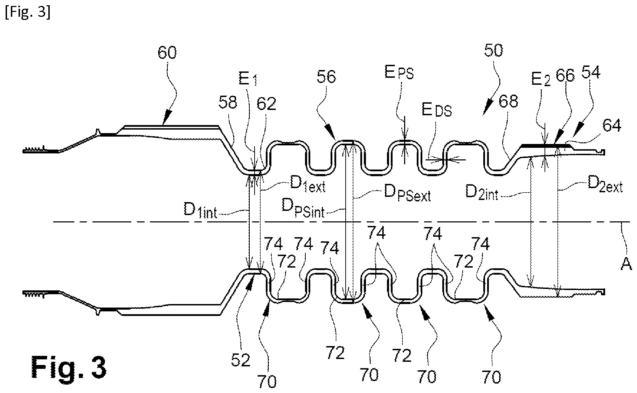

La figure 3 représente plus précisément un arbre de transmission 50.

La première portion 52 ayant une forme tubulaire, on définit le premier diamètre externe Dlext comme étant le diamètre extérieur de la première portion 52 et le premier diamètre interne D1int comme étant le diamètre intérieur de la première portion 52. Le premier diamètre D1 correspond à une moyenne entre le premier diamètre externe Dlext et le premier diamètre interne D1int.

Selon l'invention, les termes « intérieur » et « extérieur » sont définis par rapport à l'axe A, « intérieur » étant radialement plus proche de l'axe A et « extérieur » étant radialement plus éloigné de l'axe A.

L'épaisseur E1 de la première portion 52 correspond à la différence entre le premier diamètre externe Dlext et le premier diamètre interne D1int. L'épaisseur E1 peut être comprise entre 2 mm et 6 mm.

Les premiers diamètres interne D1int et externe Dlext de la première portion 52 peuvent varier le long de l'axe A. Autrement dit, l'épaisseur E1 de la première portion 52 peut varier le long de l'axe A.

De même, la deuxième portion 54 ayant une forme tubulaire, on définit le deuxième diamètre externe D2ext comme étant le diamètre extérieur de la deuxième portion 54 et le deuxième diamètre interne D2int comme étant le diamètre intérieur de la deuxième portion 54. Le deuxième diamètre D2 correspond à une moyenne entre le deuxième diamètre externe D2ext et le deuxième diamètre interne D2int.

L'épaisseur E2 de la deuxième portion 54 correspond à la différence entre le deuxième diamètre externe D2ext et le deuxième diamètre interne D2int. L'épaisseur E2 peut être comprise entre 2 mm et 6 mm.

Les deuxièmes diamètres interne D2int et externe D2ext de la deuxième portion 54 peuvent varier le long de l'axe A. Autrement dit, l'épaisseur E2 de la deuxième portion 54 peut varier le long de l'axe A.

L'arbre de transmission 50 comporte également des moyens de liaison 56 qui relient la première portion 52 à la deuxième portion 54 et qui sont configurés pour transmettre un couple de la deuxième portion 54 à la première portion 52. En particulier, les moyens de liaison 56 sont configurés pour transmettre un couple en torsion de la deuxième portion 54 à la première portion 52. Le couple en torsion est transmis de la turbine basse pression à l'arbre basse pression 20, puis à l'arbre de transmission 50, puis au réducteur 26, puis à l'arbre de la soufflante 24, et enfin aux pales 22.

La première portion 52 peut comporter une première extrémité 58 apte à être reliée au réducteur 26. La première extrémité 58 comprend par exemple des dentures d'engrenage 60. La première portion 52 peut comporter une deuxième extrémité 62 qui est reliée aux moyens de liaison 56.

La deuxième portion 54 peut comporter une première extrémité 64 apte à être reliée à un deuxième arbre de transmission 42. La première extrémité 64 comporte par exemple des cannelures 66. La deuxième portion 54 peut comporter une deuxième extrémité 68 qui est reliée aux moyens de liaison 56.

En particulier, l'arbre de transmission 50 est monobloc, c'est-à-dire que la première portion 52, la deuxième portion 54 et les moyens de liaison 56 sont monolithiques.

Les moyens de liaison 56 comprennent un ou une pluralité de soufflets 70. Par exemple, sur la figure 2, les moyens de liaison 56 comportent deux soufflets 70, tandis que sur la figure 3, les moyens de liaison 56 comportent quatre soufflets 70.

Un soufflet 70 comprend une première section 72 s'étendant longitudinalement selon l'axe A. La première section 72 est de forme annulaire. La première section 72 a un diamètre $D_{PS}$ supérieur au premier diamètre D1 et au deuxième diamètre D2. Le diamètre $D_{PS}$ peut être au moins 1,5 fois supérieur au premier diamètre D1 et au deuxième diamètre D2. Le diamètre $D_{PS}$ peut être compris entre 120 mm et 400 mm, par exemple entre 140 mm et 250 mm.

Les soufflets 70 permettent d'obtenir une souplesse pour la dynamique d'ensemble et le désalignement. Une souplesse est définie par un besoin en dynamique d'ensemble, par son installation au sein de la turbomachine, c'est-à-dire par son encombrement, et par son mode d'obtention, c'est-à-dire si le soufflet est une pièce monobloc, ou est obtenu par formage, par soudage, ou par reprise interne de l'arbre.

On définit le diamètre externe $D_{PSext}$ comme étant le diamètre extérieur de la première section 72 et le diamètre interne $D_{PSint}$ comme étant le diamètre intérieur de la première section 72. Le diamètre $D_{PS}$ correspond à une moyenne entre le diamètre externe $D_{PSext}$ et le diamètre interne $D_{PSint}$.

Le diamètre interne $D_{PSint}$ peut être compris dans un rapport de 1 à 4 par rapport au premier diamètre interne D1int. Par exemple, le diamètre interne $D_{PSint}$ peut être compris entre 1 à 2 fois le premier diamètre interne D1int.

L'épaisseur $E_{PS}$ de la première section 72 correspond à la différence entre le diamètre externe $D_{PSext}$ et le diamètre interne $D_{PSint}$. L'épaisseur $E_{PS}$ peut être comprise entre 2 mm et 6 mm. L'épaisseur $E_{PS}$ de la première section 72 peut varier le long de l'axe A.

L'épaisseur E1 de la première portion 52 peut être supérieure à l'épaisseur $E_{PS}$ de la première section 72. L'épaisseur E2 de la deuxième portion 54 peut être supérieure à l'épaisseur $E_{PS}$ de la première section 72.

Les épaisseurs sont fonction des couples qui sont transmis par l'arbre de transmission et du besoin de souplesse en dynamique d'ensemble selon les besoins de la turbomachine.

Un soufflet 70 comprend également des deuxièmes sections 74 s'étendant radialement par rapport à l'axe A et encadrant la première section 72. Les deuxièmes sections 74 correspondent à des épaulements de la première section 72.

L'épaisseur $E_{DS}$ d'une deuxième section 74 peut être comprise entre 2 mm et 6 mm.

L'épaisseur $E_{DS}$ de la deuxième section 74 peut varier de façon radiale par rapport à l'axe A.

L'épaisseur E1 de la première portion 52 peut être supérieure à l'épaisseur $E_{DS}$ des deuxièmes sections 74. Par exemple, l'épaisseur $E_{DS}$ peut être comprise entre 70% et 80% de l'épaisseur E1.

L'épaisseur E2 de la deuxième portion 54 peut être supérieure à l'épaisseur $E_{DS}$ des deuxièmes sections 74. Par exemple, l'épaisseur $E_{DS}$ peut être comprise entre 70% et 80% de l'épaisseur E2.

L'épaisseur $E_{DS}$ des deuxièmes sections 74 peut être supérieure à l'épaisseur $E_{PS}$ de la première section 72. Par exemple, l'épaisseur $E_{PS}$ peut être comprise entre 70% et 80% de l'épaisseur $E_{DS}$. Autrement dit, l'épaisseur $E_{PS}$ peut être comprise entre 49% et 64% de l'épaisseur E1 ou de l'épaisseur E2.

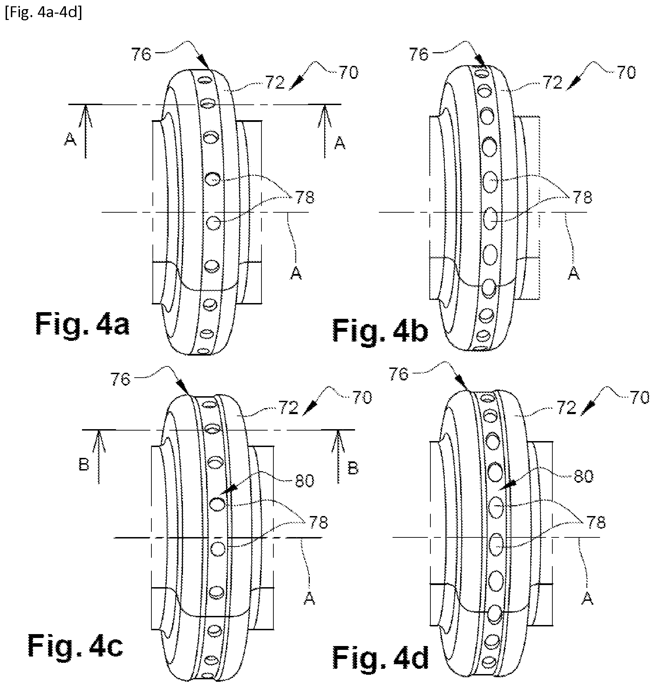

Les figures 4a, 4b, 4c et 4d représentent différents modes de réalisation d'un soufflet 70.

La première section 72 comporte au moins une section fusible 76. La section fusible 76 est configurée pour se rompre lorsque la valeur d'un couple appliqué sur la première portion 52 dépasse une valeur seuil prédéterminée. Autrement dit, la section fusible 76 est configurée pour séparer la première portion 52 de la deuxième portion 54 lorsqu'un sur-couple est appliqué sur la première portion 52.

La valeur seuil prédéterminée peut être comprise entre 25000 Nm et 100000 Nm.

En particulier, l'arbre de transmission 50 est dimensionné pour transmettre un couple maximal en fonctionnement normal et pour se casser lorsqu'un sur-couple de l'ordre de 5 % à 15 % supérieur au couple maximal nominal est rencontré. Un sur-couple peut par exemple être dû à un blocage dans le réducteur 26.

La valeur seuil prédéterminée dépend de la poussée de la turbomachine, du choix du rapport de réduction du réducteur 26, de la vitesse de rotation de la turbine, et de la capacité de la section fusible à assurer la transmission jusqu'au couple nominal, tout en assurant la rupture instantanée à la valeur de sur-couple (en tenant compte des marges de dimensionnement). La section fusible 76 peut s'étendre sur au moins un secteur angulaire de la première section 72. Autrement dit, seulement une partie de la première section 72 peut former la section fusible 76. La section fusible 76 peut être formée sur une pluralité de secteurs angulaires de la première section 72, par exemple régulièrement répartis, autour de l'axe A.

Comme représenté sur les figures 4a à 4d, la section fusible 76 peut être de forme annulaire. Autrement dit, la première section 72 peut comprendre, tout autour de l'axe A, la section fusible 76. Ainsi, la totalité de la première section 72 peut former la section fusible 76.

La section fusible 76 comprend un ou une pluralité d'orifices traversants 78.

Les orifices traversant 78 peuvent être formés sur un secteur angulaire de la section fusible 76 autour de l'axe A, ou être régulièrement répartis sur la section fusible 76 par rapport à l'axe A.

Les orifices traversants 78 peuvent être de forme circulaire ou oblongue. Par exemple, sur les figures 4a et 4c, les orifices traversants 78 sont de forme circulaire, tandis que sur les figures 4b et 4d, les orifices traversants 78 sont de forme oblongue. La forme oblongue des orifices traversants permet de diminuer la section entre deux orifices consécutifs, sans augmenter l'encombrement axial, et ainsi d'optimiser le réglage du couple de sectionnement. Bien entendu, les orifices traversants 78 peuvent également être de forme polygonale ou quelconque.

Un orifice traversant 78 permet en outre une évacuation de l'huile ayant pu s'accumuler au niveau de la première section 72.

De façon optionnelle, la première section 72 peut comporter une partie amincie 80 dont l'épaisseur est inférieure à l'épaisseur $E_{PS}$ de la première section 72. Par exemple, l'épaisseur $E_{PA}$ de la partie amincie 80 peut être comprise entre 70% et 80% de l'épaisseur $E_{PS}$ de la première section 72. L'épaisseur $E_{PA}$ de la partie amincie 80 peut être comprise entre 1 mm et 5 mm. L'épaisseur $E_{PA}$ de la partie amincie 80 peut varier le long de l'axe A.

En particulier, la partie amincie 80 peut comporter la section fusible 76. La partie amincie 80 peut s'étendre sur au plus 80 % de la longueur de la première section 72, c'est-à-dire sur au plus 80 % de la dimension de la première section 72 le long de l'axe A. De préférence, la partie amincie 80 s'étend sur au moins 50 % de la longueur de la première section 72. De façon avantageuse, ceci permet de ne pas fragiliser la première section 72, tout en permettant d'avoir une section fusible 76 sur ladite première section 72 configurée pour rompre l'arbre de transmission 50 en deux parties distinctes lorsque la valeur d'un couple appliqué sur la première portion 52 dépasse une valeur seuil prédéterminée.

La partie amincie 80 peut être formée sur au moins un secteur angulaire de la section fusible 76, et donc de la première section 72. Autrement dit, seulement une partie de la section fusible 76 peut comprendre une partie amincie 80. La partie amincie 80 peut être formée sur une pluralité de secteurs angulaires de la première section 72, par exemple régulièrement répartis, autour de l'axe A. La partie amincie 80 peut être annulaire. Ainsi, la section fusible 76 peut comprendre, tout autour de l'axe A, une partie amincie 80.

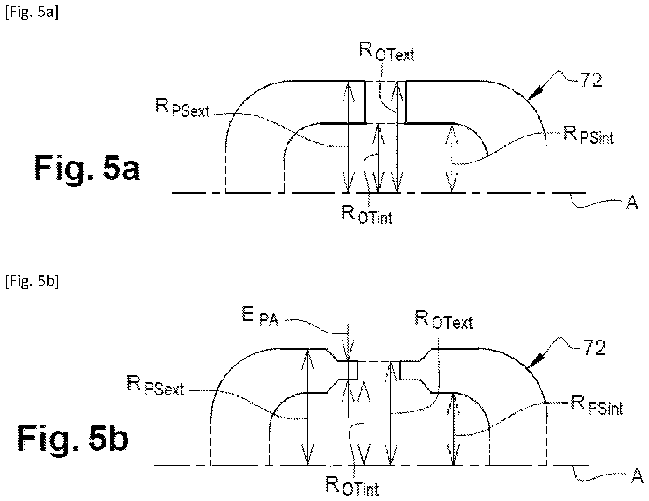

Les figures 5a et 5b représentent différents modes de réalisation d'une première section 72. Sur la figure 5a, l'épaisseur de la première section 72 est constante.

Sur la figure 5b, la première section 72 comporte une partie amincie 80. Ici, le diamètre interne de la partie amincie 80 est supérieur au diamètre interne $D_{PSint}$ de la première section 72, et le diamètre externe de la partie amincie 80 est inférieur au diamètre externe $D_{PSext}$ de la première section 72. Autrement dit, la première section 72 est amincie depuis l'intérieur et depuis l'extérieur par rapport à l'axe A. Bien entendu, la première section 72 peut être amincie uniquement depuis l'intérieur ou l'extérieur par rapport à l'axe A.

Un orifice traversant 78 peut être défini selon l'équation suivante :

[Math. 2]

$$\frac{(R_{OText}^2 - R_{OTint}^2)}{Kt} < (R_{PSext}^2 - R_{PSint}^2)$$

avec $R_{OText}$ la distance radialement externe entre l'orifice traversant 78 et l'axe A, $R_{OTint}$ la distance radialement interne entre l'orifice traversant 78 et l'axe A, Kt un facteur de concentration de contrainte généré par l'orifice traversant 78, $R_{PSext}$ le rayon externe entre la première section 72 et l'axe A et $R_{PSint}$ le rayon interne entre la première section 72 et l'axe A.

Par distance radialement externe, on entend la distance radiale de l'orifice traversant 78 au niveau de l'extérieur de la section fusible 76 par rapport à l'axe A, et donc la distance radiale de l'orifice traversant 78 la plus éloignée de l'axe A. Par distance radialement interne, on entend la distance radiale de l'orifice traversant 78 au niveau de l'intérieur de la section fusible 76 par rapport à l'axe A, et donc la distance radiale de l'orifice traversant 78 la plus proche de l'axe A.

Le facteur Kt dépend de la géométrie de l'arbre de transmission, de l'orifice traversant 78, ainsi que du nombre d'orifices traversants 78 dans la section fusible 76. A titre d'exemple non limitatif, le facteur Kt peut être compris entre 1,2 et 5.

Un orifice traversant 78 tel que défini ci-dessus peut être apte à exercer la fonction fusible. En particulier, la section fusible 76 n'est pas épaissie localement au niveau d'un orifice traversant 78, ni de l'intérieur, ni de l'extérieur par rapport à l'axe A. La section fusible 76 est soit d'épaisseur constante, soit comporte une partie amincie 80 à partir de l'intérieur et/ou de l'extérieur par rapport à l'axe A. Ainsi, l'épaisseur de la section fusible 76 n'est pas augmentée autour de l'orifice traversant 78. Ceci permet que l'orifice traversant 78 soit apte à exercer la fonction fusible.

Lorsque les moyens de liaison comportent une pluralité de soufflets 70, comme représenté notamment sur la figure 3, chaque soufflet 70 peut comprendre une première section 72 et des deuxièmes sections 74.

Pour au moins un des soufflets 70, dit premier soufflet, la première section 72 de ce soufflet 70 peut comporter une section fusible 76 qui comprend un ou une pluralité d'orifices traversants 78 et qui est configurée pour se rompre lorsque la valeur d'un couple appliqué sur la première portion 52 dépasse une valeur seuil prédéterminée. Autrement dit, au moins un des soufflets 70 peut comporter une section fusible 76 sur sa première section 72, et donc au moins un orifice traversant 78 apte à exercer une fonction fusible. En particulier, seulement un des soufflets 70 peut comporter une section fusible 76 ayant au moins un orifice traversant 78 apte à exercer une fonction fusible sur sa première section 72. Un orifice traversant 78 du premier soufflet a également un rôle de drainage de l'huile accumulée. Pour les autres soufflets, dits deuxième soufflets, la première section 72 de ces soufflets ne comporte pas de section fusible 76, ni d'orifice traversant 78 apte à exercer une fonction fusible. Les deuxièmes soufflets peuvent comporter un ou une pluralité d'orifices de drainage de l'huile, qui sont configurés pour drainer l'huile accumulée au niveau de la première section du soufflet. Ces orifices de drainage de l'huile ne sont pas aptes à exercer la fonction de fusible des orifices traversants 78.

En variante, la première section 72 de chaque soufflet 70 de la pluralité de soufflets, c'est-à-dire des premier et deuxième soufflets, peut comporter une section fusible 76 comprenant au moins un orifice traversant 78 et étant configurée pour se rompre lorsqu'un sur-couple est appliqué sur la première portion 52. Autrement dit, tous les soufflets comportent des orifices aptes à exercer la fonction de fusible, ces orifices permettant également le drainage de l'huile accumulée au niveau de la première section de chaque soufflet.

L'invention concerne également un procédé de protection contre un sur-couple d'un arbre de transmission 50 tel que décrit précédemment.

Le procédé comprend une étape de rupture de la section fusible 76 lorsque la valeur d'un couple appliqué sur la première portion 52 dépasse une valeur seuil prédéterminée. Autrement dit, le procédé comprend une étape de rupture de l'arbre de transmission 50 en deux parties distinctes, la première portion 52 et la deuxième portion 54, lorsqu'un sur-couple est appliqué sur la première portion 52 de l'arbre de transmission 50.

Ceci permet avantageusement de protéger la ligne de transmission contre un couple élevé appliqué sur un des éléments de la ligne de transmission.

8

**Revendications**

1. Arbre de transmission (50) d'une turbomachine (10) d'aéronef, comprenant :

   - une première portion (52) s'étendant longitudinalement selon un axe (A) et ayant un premier diamètre (D1),
   - une deuxième portion (54) s'étendant longitudinalement selon ledit axe (A) et ayant un deuxième diamètre (D2), et
   - des moyens de liaison (56) reliant lesdites première et deuxième portions et étant configurés pour transmettre un couple de ladite deuxième portion (54) à ladite première portion (52), lesdits moyens de liaison (56) comprennent au moins un soufflet (70) comprenant :

     - une première section (72) s'étendant longitudinalement selon ledit axe (A) et ayant un diamètre ($D_{PS}$) supérieur auxdits premier et deuxième diamètres, et
     - des deuxièmes sections (74) s'étendant radialement audit axe (A) et encadrant ladite première section (72),

   ledit arbre de transmission (50) étant **caractérisé en ce que** ladite première section (72) comporte au moins une section fusible (76) comprenant au moins un orifice traversant (78) et étant configurée pour se rompre lorsque la valeur d'un couple appliqué sur ladite première portion (52) dépasse une valeur seuil prédéterminée.

2. Arbre de transmission (50) selon la revendication précédente, dans lequel l'épaisseur (E1, E2) des première et deuxième portions (52, 54) est supérieure à l'épaisseur (EDS) des deuxièmes sections (74) et/ou l'épaisseur (EDS) des deuxièmes sections (74) est supérieure à l'épaisseur (EPS) de la première section (72).

3. Arbre de transmission (50) selon l'une des revendications précédentes, dans lequel ladite première section (72) comporte une partie amincie (80) dont l'épaisseur ($E_{PA}$) est inférieure à l'épaisseur ($E_{PS}$) de la première section (72), ladite partie amincie (80) comportant ladite section fusible (76).

4. Arbre de transmission (50) selon la revendication 3, dans lequel la partie amincie(80) s'étend sur au plus 80 % de la longueur de la première section (72).

5. Arbre de transmission (50) selon l'une des revendications précédentes, dans lequel ladite section fusible (76) comprend une pluralité d'orifices traversants (78) régulièrement répartis autour dudit axe (A).

6. Arbre de transmission (50) selon l'une des revendications précédentes, dans lequel ledit ou chaque orifice traversant (78) est de forme circulaire ou oblongue.

7. Arbre de transmission (50) selon l'une des revendications précédentes, dans lequel ledit ou chaque orifice traversant (78) est défini tel que :

$$\frac{(R_{OText}^2 - R_{OTint}^2)}{Kt} < (R_{PSext}^2 - R_{PSint}^2)$$

avec $R_{OText}$ la distance radialement externe entre ledit orifice traversant (78) et ledit axe (A), $R_{OTint}$ la distance radialement interne entre ledit orifice traversant (78) et ledit axe (A), Kt un facteur de concentration de contrainte généré par ledit orifice traversant (78), $R_{PSext}$ le rayon externe entre ladite première section (72) et ledit axe (A) et $R_{PSint}$ le rayon interne entre ladite première section (72) et ledit axe (A).

8. Arbre de transmission (50) selon l'une des revendications précédentes, dans lequel lesdits moyens de liaison (56) comprennent une pluralité de soufflets (70), chaque soufflet (70) comprenant :

   - une première section (72) s'étendant longitudinalement selon ledit axe (A) et ayant un diamètre (DPS) supérieur auxdits premier et deuxième diamètres, et
   - des deuxièmes sections (74) s'étendant radialement audit axe (A) et encadrant ladite première section (72),

   et pour au moins un des soufflets (70), la première section (72) dudit soufflet (70) comporte au moins une section fusible (76) comprenant au moins un orifice traversant (78) et étant configurée pour se rompre lorsque la valeur d'un couple appliqué sur ladite première portion (52) dépasse une valeur seuil prédéterminée.

9. Arbre de transmission (50) selon l'une des revendications précédentes, dans lequel ladite première portion (52) comporte une première extrémité (58) comprenant des dentures d'engrenage (60) et étant apte à être reliée à un réducteur (26) et une deuxième extrémité (62) reliée auxdits moyens de liaison (56), et ladite deuxième portion (54) comporte une première extrémité (64) comprenant des cannelures (66) et étant apte à être reliée à un deuxième arbre de transmission (42) et une deuxième extrémité (68) reliée auxdits moyens de liaison (56).

10. Arbre de transmission (50) selon l'une des revendications 1 à 9, dans lequel le premier diamètre (D1) est sensiblement égal au deuxième diamètre (D2).

11. Arbre de transmission (50) selon l'une des revendications 1 à 9, dans lequel le premier diamètre (D1) est différent du deuxième diamètre (D2).

12. Arbre de transmission (50) selon l'une des revendications 1 à 11, dans lequel le diamètre ($D_{PS}$) de la première section (72) est au moins 1,5 fois supérieur aux premier et deuxième diamètres (D1, D2).

13. Turbomachine (10) d'aéronef, comprenant :

   - un arbre de transmission (50) selon l'une des revendications précédentes,
   - un réducteur (26) relié à ladite première portion (52), et
   - un deuxième arbre de transmission (42) relié à ladite deuxième portion (54).

14. Procédé de protection contre un sur-couple d'un arbre de transmission (50) d'une turbomachine (10) selon l'une des revendications 1 à 12, comprenant une étape de rupture de la section fusible (76) lorsque la valeur d'un couple appliqué sur la première portion (52) dépasse une valeur seuil prédéterminée.


**Patentansprüche**

1. Antriebswelle (50) einer Turbomaschine (10) eines Flugzeugs, umfassend:
   einen ersten Abschnitt (52), der sich längslaufend entlang einer Achse (A) erstreckt und einen ersten Durchmesser (D1) aufweist

   - einen zweiten Abschnitt (54), der sich längslaufend entlang der Achse (A) erstreckt und einen zweiten Durchmesser (D2) aufweist, und
   - Verbindungsmittel (56), die den ersten und den zweiten Abschnitt verbinden und konfiguriert sind, um ein Drehmoment des zweiten Abschnitts (54) auf den ersten Abschnitt (52) zu übertragen, wobei die Verbindungsmittel (56) mindestens einen Balg (70) umfassen, umfassend:

      - einen ersten Teilabschnitt (72), der sich längslaufend entlang der Achse (A) erstreckt und einen Durchmesser ($D_{PS}$) aufweist, der größer ist als der erste und der zweite Durchmesser, und
      - zweite Teilabschnitte (74), die sich radial zur Achse (A) erstrecken und den ersten Teilabschnitt (72) umrahmen,

   wobei die Antriebswelle (50) **dadurch gekennzeichnet ist, dass** der erste Teilabschnitt (72) mindestens einen Sicherungsteilabschnitt (76) umfasst, der mindestens eine Durchgangsöffnung (78) umfasst und konfiguriert ist, um zu brechen, wenn der Wert eines auf den ersten Abschnitt (52) angewendeten Drehmoments einen vorbestimmten Schwellenwert überschreitet.

2. Antriebswelle (50) nach dem vorstehenden Anspruch, wobei die Dicke (E1, E2) des ersten und des zweiten Abschnitts (52, 54) größer ist als die Dicke (EDS) der zweiten Teilabschnitte (74) und/oder die Dicke (EDS) der zweiten Teilabschnitte (74) größer ist als die Dicke (EPS) des ersten Teilabschnitts (72).

3. Antriebswelle (50) nach einem der vorstehenden Ansprüche, wobei der erste Teilabschnitt (72) einen verdünnten Teil (80) umfasst, bei dem die Dicke ($E_{PA}$) kleiner ist als die Dicke ($E_{PS}$) des ersten Teilabschnitts (72), wobei der verdünnte Teil (80) den Sicherungsteilabschnitt (76) umfasst.

4. Antriebswelle (50) nach Anspruch 3, wobei sich der verdünnte Teil (80) über höchstens 80% der Länge des ersten Teilabschnitts (72) erstreckt.

5. Antriebswelle (50) nach einem der vorstehenden Ansprüche, wobei der Sicherungsteilabschnitt (76) eine Vielzahl von Durchgangsöffnungen (78) umfasst, die regelmäßig um die Achse (A) verteilt sind.

6. Antriebswelle (50) nach einem der vorstehenden Ansprüche, wobei die oder jede Durchgangsöffnung (78) kreisförmig oder länglich ist.

7. Antriebswelle (50) nach einem der vorstehenden Ansprüche, wobei die oder jede Durchgangsöffnung (78) derart definiert ist, dass:

$$\frac{(R_{OText}^2 - R_{OTint}^2)}{Kt} < (R_{PSext}^2 - R_{PSint}^2)$$

wobei $_{OText}$ der radial äußere Abstand zwischen der Durchgangsöffnung (78) und der Achse (A) ist, $R_{OTint}$ der radial innere Abstand zwischen der Durchgangsöffnung (78) und der Achse (A) ist, Kt ein Engstellenkonzentrationsfaktor ist, der durch die Durchgangsöffnung (78) erzeugt wird, $R_{PSext}$ der äußere Radius zwischen dem ersten Teilabschnitt (72) und der Achse (A) ist und $R_{PSint}$ der innere Radius zwischen dem ersten Teilabschnitt (72) und der Achse (A) ist.

8. Antriebswelle (50) nach einem der vorstehenden Ansprüche, wobei die Verbindungsmittel (56) eine Vielzahl von Balgen (70) umfassen, wobei jeder Balg (70) Folgendes umfasst:

  - einen ersten Teilabschnitt (72), der sich längslaufend entlang der Achse (A) erstreckt und einen Durchmesser (DPS) aufweist, der größer ist als der erste und der zweite Durchmesser, und
  - zweite Teilabschnitte (74), die sich radial zur Achse (A) erstrecken und den ersten Teilabschnitt (72) umrahmen,

und wobei für mindestens einen der Balge (70) der erste Teilabschnitt (72) des Balgs (70) mindestens einen Sicherungsteilabschnitt (76) umfasst, der mindestens eine Durchgangsöffnung (78) umfasst und konfiguriert ist, um zu brechen, wenn der Wert eines auf den ersten Abschnitt (52) angewendeten Drehmoments einen vorbestimmten Schwellenwert überschreitet.

9. Antriebswelle (50) nach einem der vorstehenden Ansprüche, wobei der erste Abschnitt (52) ein erstes Ende (58), das Verzahnungen (60) umfasst und geeignet ist, mit einem Untersetzungsgetriebe (26) verbunden zu sein, und ein zweites Ende (62), das mit den Verbindungsmitteln (56) verbunden ist, umfasst, und wobei der zweite Abschnitt (54) ein erstes Ende (64), das Nuten (66) umfasst und geeignet ist, mit einer zweiten Antriebswelle (42) verbunden zu sein, und ein zweites Ende (68), das mit den Verbindungsmitteln (56) verbunden ist, umfasst.

10. Antriebswelle (50) nach einem der Ansprüche 1 bis 9, wobei der erste Durchmesser (D1) im Wesentlichen gleich dem zweiten Durchmesser (D2) ist.

11. Antriebswelle (50) nach einem der Ansprüche 1 bis 9, wobei sich der erste Durchmesser (D1) vom zweiten Durchmesser (D2) unterscheidet.

12. Antriebswelle (50) nach einem der Ansprüche 1 bis 11, wobei der Durchmesser ($D_{PS}$) des ersten Teilabschnitts (72) mindestens 1,5-mal so groß ist wie der erste und der zweite Durchmesser (D1, D2).

13. Turbomaschine (10) eines Flugzeugs, umfassend:

  - eine Antriebswelle (50) nach einem der vorstehenden Ansprüche;
  - ein Untersetzungsgetriebe (26), das mit dem ersten Abschnitt (52) verbunden ist, und
  - eine zweite Antriebswelle (42), die mit dem zweiten Abschnitt (54) verbunden ist.

14. Verfahren zum Schutz vor einem Überdrehmoment einer Antriebswelle (50) einer Turbomaschine (10) nach einem der Ansprüche 1 bis 12, umfassend einen Schritt des Brechens des Sicherungsteilabschnitts (76), wenn der Wert eines auf den ersten Abschnitt (52) angewendeten Drehmoments einen vorbestimmten Schwellenwert überschreitet.

**Claims**

1.  A drive shaft (50) of an aircraft turbomachine (10), comprising:

    - a first portion (52) extending longitudinally along an axis (A) and having a first diameter (D1),
    - a second portion (54) extending longitudinally along said axis (A) and having a second diameter (D2), and
    - connecting means (56) connecting said first and second portions and being configured to transmit a torque from said second portion (54) to said first portion (52), said connecting means (56) comprise at least one bellows (70) comprising:

    - a first section (72) extending longitudinally along said axis (A) and having a diameter ($D_{PS}$) greater than said first and second diameters, and
    - second sections (74) extending radially to said axis (A) and flanking said first section (72),

    said drive shaft (50) being **characterized in that** said first section (72) comprises at least one fusible section (76) comprising at least one through orifice (78) and being configured to break when the value of a torque applied to said first portion (52) exceeds a predetermined threshold value.

2.  The drive shaft (50) according to the preceding claim, wherein the thickness (E1, E2) of the first and second portions (52, 54) is greater than the thickness (EDS) of the second sections (74) and/or the thickness (EDS) of the second sections (74) is greater than the thickness (EPS) of the first section (72).

3.  The drive shaft (50) according to any of the preceding claims, wherein said first section (72) comprises a thinned part (80) whose thickness ($E_{PA}$) is less than the thickness ($E_{PS}$) of the first section (72), said thinned part (80) comprising said fusible section (76).

4.  The drive shaft (50) according to claim 3, wherein the thinned part (80) extends over at most 80% of the length of the first section (72).

5.  The drive shaft (50) according to any of the preceding claims, wherein said fusible section (76) comprises a plurality of through orifices (78) regularly distributed around said axis (A).

6.  The drive shaft (50) according to any of the preceding claims, wherein said or each through orifice (78) is circular or oblong in shape.

7.  The drive shaft (50) according to any of the preceding claims, wherein said or each through orifice (78) is defined such as:

$$\frac{(R_{OText}^2 - R_{OTint}^2)}{Kt} < (R_{PSext}^2 - R_{PSint}^2)$$

    where $R_{OText}$ is the radially outer distance between said through orifice (78) and said axis (A), $R_{OTint}$ is the radially inner distance between said through orifice (78) and said axis (A), Kt is a stress concentration factor generated by said through orifice (78), $R_{PSext}$ is the outer radius between said first section (72) and said axis (A) and $R_{PSint}$ is the inner radius between said first section (72) and said axis (A).

8.  The drive shaft (50) according to any of the preceding claims, wherein said connecting means (56) comprise a plurality of bellows (70), each bellows (70) comprising:

    - a first section (72) extending longitudinally along said axis (A) and having a diameter (DPS) greater than said first and second diameters, and
    - second sections (74) extending radially to said axis (A) and flanking said first section (72),

    and for at least one of the bellows (70), the first section (72) of said bellows (70) comprises at least one fusible section (76) comprising at least one through orifice (78) and being configured to break when the value of a torque applied to said first portion (52) exceeds a predetermined threshold value.

9. The drive shaft (50) according to any of the preceding claims, wherein said first portion (52) comprises a first end (58) comprising gear teeth (60) and being adapted to be connected to a reduction gearbox (26) and a second end (62) connected to said connecting means (56) and said second portion (54) comprises a first end (64) comprising splines (66) and being adapted to be connected to a second drive shaft (42) and a second end (68) connected to said connecting means (56).

10. The drive shaft (50) according to any of claims 1 to 9, wherein the first diameter (D1) is substantially equal to the second diameter (D2).

11. The drive shaft (50) according to any of claims 1 to 9, wherein the first diameter (D1) is different from the second diameter (D2).

12. The drive shaft (50) according to any of claims 1 to 11, wherein the diameter ($D_{PS}$) of the first section (72) is at least 1.5 times greater than the first and second diameters (D1, D2).

13. An aircraft turbomachine (10), comprising:

    - a drive shaft (50) according to one of the preceding claims,
    - a reduction gearbox (26) connected to said first portion (52), and
    - a second drive shaft (42) connected to said second portion (54).

14. A method for protecting a drive shaft (50) of a turbomachine (10) according to one of claims 1 to 12 against overtorque, comprising a step of breaking the fusible section (76) when the value of a torque applied to the first portion (52) exceeds a predetermined threshold value.

[Fig. 1]

**Fig. 1**

[Fig. 2]

**Fig. 2**

[Fig. 3]

Fig. 3

[Fig. 4a-4d]

Fig. 4a

Fig. 4b

Fig. 4c

Fig. 4d

[Fig. 5a]

Fig. 5a

[Fig. 5b]

Fig. 5b

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010111691 A1
- EP 1199441 A2
- EP 3205840 A1
- FR 2909146 A1
- US 20170175753 A1
- FR 3015570 A